# EUROPÄISCHE PATENTSCHRIFT

(11) **EP 4 188 723 B1**
(45) Veröffentlichungstag und Bekanntmachung des Hinweises auf die Patenterteilung: **24.04.2024**
(21) Anmeldenummer: 21745953.6
(22) Anmeldetag: 14.07.2021
(51) Int. Cl.: B60C 27/02, B60B 15/22, B60C 27/06

(54) **SCHEIBENFÖRMIGE KLEMMPLATTE MIT KLEMMBACKEN**
DISK-SHAPED CLAMPING PLATE COMPRISING CLAMPING JAWS
PLAQUE DE SERRAGE EN FORME DE DISQUE AVEC DES MACHOIRES

(30) Priorität: 27.07.2020 DE 102020209418
(43) Veröffentlichungstag der Anmeldung: 07.06.2023
(73) Patentinhaber: RUD Ketten Rieger & Dietz GmbH u. Co. KG, 73432 Aalen (DE)
(72) Erfinder: ARRIGONI NERI, Marco, 22046 (CO) Merone (IT); FARINA, Luigi, 23843 (LC) Dolzago (IT)
(74) Vertreter: Grünecker Patent- und Rechtsanwälte PartG mbB
(86) Internationale Anmeldenummer: PCT/EP2021/069619
(87) Internationale Veröffentlichungsnummer: WO 2022/023041

(56) Entgegenhaltungen:
- EP-A1- 2 823 975
- WO-A1-2020/239379
- US-A- 2 477 051
- US-A- 3 071 173

## Beschreibung

Die Erfindung betrifft eine scheibenförmige Klemmplatte zur Anbringung in einer zentralen Öffnung einer Radnabe oder Felge eines Fahrzeugrades. Die Erfindung betrifft darüber hinaus eine Gleitschutzvorrichtung, insbesondere eine Reifenkette, mit einem zur Auflage auf einer Reifenlauffläche ausgestalteten Laufnetz und einer solchen Klemmplatte.

Beim Einsatz von Gleitschutzvorrichtungen an Fahrzeugrädern ist es erforderlich, dass die Gleitschutzvorrichtung sicher am Fahrzeugrad befestigt ist. Darüber hinaus ist es gewünscht, dass die Anbringung der Gleitschutzvorrichtung am Fahrzeugrad einfach und ohne Fachkenntnisse möglich ist. Dabei sollte die Klemmplatte die Felge nicht beschädigen.

Gleitschutzvorrichtungen, die mittels einer zentralen Öffnung am Fahrzeugrad angebracht werden, sind aus der US 2,397,277, der US 3,071,173 und der US 3,935,891 bekannt. Diese Gleitschutzvorrichtungen sind jedoch sehr komplex aufgebaut, fehleranfällig und teuer.

In der EP 2 823 975 B1 und der EP 3 019 353 B1 sind Fixiervorrichtungen für Felgen mit zentraler Öffnung beschrieben, an denen Gleitschutzvorrichtungen befestigt werden können. Nachteilig bei diesen Fixiervorrichtungen ist ebenfalls der komplexe mechanische Aufbau. Zudem sind diese Fixiervorrichtungen bei Verschmutzungen nur schwer zu reinigen. Es besteht die Gefahr, dass eine verschmutzte Fixiervorrichtung blockiert und nicht mehr an der Felge angebracht oder von der Felge gelöst werden kann.

Aus der DE 10 2009 004 807 ist eine Gleitschutzvorrichtung bekannt, die sich beim Anfahren selbst auf das Fahrzeugrad zieht. Diese Gleitschutzvorrichtung benötigt zur Befestigung einen Haltearm, der an einer Felgenschraube angebracht wird. Der Haltearm ist für Felgen oder Radnaben mit einer zentralen Öffnung nicht geeignet.

Die US 2,477,051 A zeigt eine Gleitschutzvorrichtung, bei der eine Scheibe hinter einer Nabe angeordnet ist. In der US 3,071,173 A ist eine Gleitschutzvorrichtung für Reifen gezeigt, bei der Arme von einem zentralen Körper abstehen. Die WO 2020/239379 A1, die nur nach Art. 54 (3) EPÜ relevant ist, zeigt eine Lösung, bei der L-förmige Arme durch Betätigung einer Schraube nach außen gespreizt werden. In Anbetracht des Standes der Technik ist es Aufgabe der Erfindung, eine Vorrichtung bereitzustellen, die einfach und sicher am Fahrzeugrad anbringbar ist und einen sicheren Halt einer Gleitschutzvorrichtung, insbesondere einer sich selbst aufziehenden Gleitschutzvorrichtung, am Fahrzeugrad ermöglicht. Zudem soll die Klemmplatte einen einfachen Aufbau aufweisen.

Die erfindungsgemäße Aufgabe ist gelöst durch eine scheibenförmige Klemmplatte der eingangs genannten Art, wobei die Klemmplatte wenigstens eine Spreizvorrichtung und wenigstens zwei Klemmbacken aufweist, und wobei die wenigstens zwei Klemmbacken durch die wenigstens eine Spreizvorrichtung aufeinander zu und voneinander weg beweglich miteinander verbunden sind.

Für die eingangs genannte Gleitschutzvorrichtung ist die Aufgabe dadurch gelöst, dass diese mit einer erfindungsgemäßen Klemmplatte versehen ist, an der das Laufnetz unverlierbar gehalten ist. Zwischen Laufnetz und Klemmplatte kann die Gleitschutzvorrichtung noch eine Haltevorrichtung aufweisen, die wiederholt lösbar an der Klemmplatte anbringbar ist.

Die erfindungsgemäße Klemmplatte löst die erfindungsgemäße Aufgabe auf elegante Weise. Die Klemmplatte weist einen einfachen Aufbau auf, so dass sie kostengünstig herstellbar ist. Die Klemmplatte lässt sich in eine zentrale Öffnung einer Felge einsetzen. Anschließend können die beiden Klemmbacken durch die Spreizvorrichtung voneinander weg bewegt werden, so dass diese von innen gegen die Öffnung gepresst werden. Hierdurch kann die Klemmplatte sicher an der Radnabe befestigt werden. Die Klemmplatte steht dann zur Befestigung einer Gleitschutzvorrichtung zur Verfügung. Dadurch, dass die Klemmplatte in die zentrale Öffnung der Radnabe eingesetzt wird, kann auf eine aufwändige Montage mittels Radbefestigungsschrauben verzichtet werden. Durch die Scheibenform der Klemmplatte ist diese flach, so dass die Klemmplatte nicht oder nicht weit aus der zentralen Öffnung der Radnabe nach außen vorsteht. Durch diese größtenteils innerhalb der Radnabe liegende Anordnung der Klemmplatte ist die Klemmplatte selbst vor Beschädigung oder unbeabsichtigtem Lösen geschützt.

Die Klemmplatte liegt in einem in einer Radnabe oder Felge montierten Zustand bevorzugt in einer durch die Scheibe aufgespannten Ebene quer zur axialen Richtung des Fahrzeugrades. Mit anderen Worten erstreckt sich die Klemmplatte entlang einer radialen Richtung des Fahrzeugrades.

Die Klemmplatte erlaubt auf einfache Weise die Anbringung einer Gleitschutzvorrichtung, wie sie in der DE 10 2009 004 807 A1, auf die vollumfänglich Bezug genommen wird, beschrieben ist. Dabei ersetzt die Klemmplatte das an einer Radmutter anzubringende Anschlussteil.

Im Folgenden sind die Begriffe Felge und Radnabe synonym verwendet. Es kommt lediglich auf die zentrale Öffnung an.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen.

Gemäß einer ersten vorteilhaften Ausgestaltung der scheibenförmigen Klemmplatte kann jede Klemmbacke eine kreisbogenförmige Außenkontur aufweisen. Die kreisbogenförmige Außenkontur kann zur Anlage an einer Innenseite der zentralen Öffnung der Radnabe des Fahrzeugrades dienen. Die Außenkontur kann zumindest abschnittsweise von kreisbogenförmigen Außenflächen gebildet sein. Abweichungen von der Kreisbogenform sind möglich, sofern im Wesentlichen noch eine insgesamt kreisbogenförmige Außenkontur gebildet ist.

Besonders bevorzugt können die Kreisbögen der Außenkonturen der wenigstens zwei Klemmbacken zumindest abschnittsweise Teil eines gemeinsamen Kreises sein. Bevorzugt liegt die Klemmplatte mehrheitlich innerhalb des Kreises. Eine Achse des Kreises verläuft bevorzugt parallel zu einer Radachse im montierten Zustand der Klemmplatte.

Der Kreisradius ist bevorzugt größer als der halbe Radius der zentralen Öffnung. Der Kreisradius ist bevorzugt so bemessen, dass die Klemmbacken mit einem möglichst großen Teil ihrer Außenkontur an der Innenseite der zentralen Öffnung anliegen. Gleichzeitig ist der Kreisradius klein genug, um die Klemmplatte leicht in die zentrale Öffnung der Radnabe einzusetzen. Jede der beiden Klemmbacken kann insgesamt im Wesentlichen halbkreisförmig gebildet sein. Bevorzugt lassen sich die beiden Klemmbacken wenigstens so weit aufeinander zu bewegen, dass die Klemmplatte locker, also ohne größeren Kraftaufwand, in die zentrale Öffnung einsetzbar ist. Der Kreisradius ist insbesondere höchstens so groß wie der Radius der zentralen Öffnung.

Gemäß einer vorteilhaften Ausgestaltung der Spreizvorrichtung kann diese wenigstens einen Schraubentrieb aufweisen. Der Schraubentrieb kann dazu dienen, beide Klemmbacken auseinanderzutreiben und hierdurch die Klemmplatte zu spreizen. Dies kann durch eine Drehung des Schraubentriebs in einer Richtung erfolgen. Bei einer Drehung des Schraubentriebs in die umgekehrte Richtung können die Klemmbacken wieder aufeinander zu bewegt werden. Letzteres entweder direkt durch den Schraubentrieb, manuell oder durch eine Rückstelleinrichtung. Bei einer manuellen Rückstellung oder bei einer Rückstellung durch eine Rückstelleinrichtung kann sich der Schraubentrieb beim Lösen lediglich zurückziehen, so dass die beiden Klemmbacken für eine aufeinander zu gerichtete Bewegung freigegeben sind. Die Rückstelleinrichtung kann die beiden Klemmbacken dabei aufeinander zu bewegen. Eine solche Rückstellungeinrichtung kann beispielweise ein um die Klemmplatte umlaufendes elastisches Element oder eine zwischen den beiden Klemmbacken angeordnete Zugfeder sein.

Auch bei einer Spreizvorrichtung ohne Schraubentrieb kann die Rückstellung der Klemmplatten direkt durch die Spreizvorrichtung erfolgen. Alternativ dazu können die Klemmbacken - wie oben beschrieben - durch Aufheben der Spreizung lediglich freigegeben werden, so dass sie manuell oder durch eine Rückstellungeinrichtung aufeinander zu bewegt werden können.

Alternativ oder zusätzlich zum Schraubentrieb kann die Spreizvorrichtung wenigstens ein Spreizelement aufweisen, welches um eine quer zu der durch die Klemmplatte aufgespannten Scheibenebene verlaufende Drehachse drehbar ist. Das Spreizelement kann in verschiedenen Richtungen quer zu der Drehachse unterschiedliche Breiten aufweisen.

Liegen die Klemmbacken an dem Spreizelement an, so können die Klemmbacken je nach Lage des Spreizelements unterschiedlich weit voneinander wegbewegt sein. Das Spreizelement kann, mit anderen Worten, eine Kurvenscheibe sein, mit welcher die Spreizung der beiden Klemmbacken voneinander weg steuerbar ist. Das Spreizelement kann vorzugsweise eine ovale Form haben.

Die Drehachse des Spreizelements erstreckt sich bevorzugt durch dessen Mittelpunkt. Dies ist jedoch nicht zwingend erforderlich. Das Spreizelement kann alternativ auch exzentrisch drehbar sein. Zur Drehung des Spreizelement kann dieses als Antriebsorgan eine Aufnahme für ein geeignetes Werkzeug oder ein Gegenstück für ein passendes Werkzeug aufweisen.

Die Klemmbacken können Aufnahmen für das oben beschriebene Spreizelement aufweisen. Beispielsweise können die Klemmbacken zumindest abschnittsweise konkave Innenseiten aufweisen, an denen das Spreizelement anliegen und/oder entlanggleiten kann.

Um das Spreizelement in axialer Richtung zu sichern, kann wenigstens eine der Klemmbacken mit einer Nut an der Innenseite versehen sein, in der das Spreizelement zumindest teilweise aufgenommen ist. Der Grund der Nut kann eine konkave Wandung aufweisen, um die Drehung des Spreizelements zu erleichtern.

Um eine kompakt aufgebaute Klemmplatte zu erhalten, kann der wenigstens eine Schraubentrieb der Spreizvorrichtung zumindest abschnittsweise in wenigstens einer der Klemmbacken aufgenommen sein. Insbesondere kann der wenigstens eine Schraubentrieb in einer radialen Richtung in wenigstens eine der Klemmbacken hineinragen bzw. eindringen, insbesondere in einer Richtung parallel zu einer Verschieberichtung, entlang der die beiden Klemmbacken relativ zueinander beweglich sind.

Gemäß einer weiteren vorteilhaften Ausgestaltung der Klemmplatte kann der wenigstens eine Schraubentrieb der Spreizvorrichtung wenigstens zwei gegenläufige Gewinde aufweisen, von denen jeweils eines mit einem komplementär ausgestalteten Gewinde an einer der Klemmbacken zusammenwirkt. Bei der Betätigung des Schraubentriebes können sich also gleichzeitig beide Klemmbacken aufeinander zu oder voneinander weg bewegen.

Der wenigstens eine Schraubentrieb der Spreizvorrichtung kann gemäß einer weiteren vorteilhaften Ausgestaltung wenigstens einen Gewindebolzen, insbesondere mit einem Außengewinde, aufweisen und wenigstens eine der Klemmbacken kann mit wenigstens einem Innengewinde zur Aufnahme des Gewindebolzens versehen sein. Das wenigstens eine Innengewinde kann einstückig im Material der Klemmbacke geformt oder als Gewindeeinsatz in der jeweiligen Klemmbacke eingesetzt sein.

Um eine einfache Betätigung der wenigstens einen Spreizvorrichtung zu ermöglichen, kann diese wenigstens ein Antriebsorgan aufweisen. Das Antriebsorgan ist bevorzugt zwischen den beiden Klemmbacken angeordnet. Weist die Spreizvorrichtung wenigstens einen Schraubentrieb auf, ist das Antriebsorgan bevorzugt als Schraubenantrieb ausgestaltet. Dieser Schraubenantrieb kann beispielsweise durch einen Außensechskant gebildet sein. Alternativ zum Außensechskant kann der Schraubenantrieb auch anders geformt sein. Beispielsweise kann eine Öffnung im Schraubentrieb vorhanden sein, in die ein passendes Werkzeug eingesetzt werden kann, um den Schraubentrieb zu betätigen.

Eine weitere Alternative besteht darin, dass der Schraubenantrieb beabstandet vom Schraubentrieb angeordnet und mit dem Schraubentrieb bewegungsübertragend gekoppelt ist.

Durch die Anordnung des Antriebsorgans zwischen den beiden Klemmbacken ist dieses von au-ßen für ein Werkzeug bzw. für eine Bedienperson zugänglich.

Um ein sicheres Anbringen und Lösen der Klemmplatte zu gewährleisten, kann die Klemmplatte wenigstens eine Führungsvorrichtung zur verschieblichen, insbesondere radiusparallelen, Führung der beiden Klemmbacken aufweisen.

Durch die wenigstens eine Führungsvorrichtung können die beiden Klemmbacken bei der Betätigung der Spreizvorrichtung entlang einer Verschieberichtung aufeinander zu oder voneinander weg geführt werden.

Die wenigstens eine Führungsvorrichtung kann beispielsweise in Form wenigstens eines Stiftes oder einer Stange und einer dazu komplementär gebildeten Aufnahme, beispielsweise einer Bohrung gebildet sein. Beispielsweise kann wenigstens eine der Klemmbacken mit einer Stange versehen sein und die andere Klemmbacke mit einer Bohrung zur verschieblichen Aufnahme der Stange. Alternativ dazu können auch beide Klemmbacken mit einer Bohrung versehen sein, wobei eine Stange in beiden Bohrungen verschieblich aufgenommen ist. In einer alternativen Ausgestaltung kann die Führungsvorrichtung an der einen Klemmbacke eine Nut und an der anderen Klemmbacke eine zur Nut komplementäre Feder aufweisen, wobei Nut und Feder eine Führung bilden.

Bevorzugt sind zwei Führungsvorrichtungen vorgesehen, wobei die wenigstens eine Spreizvorrichtung quer zu einer durch die Führungsvorrichtungen vorgegebenen Verschieberichtung zwischen den wenigstens zwei Führungsvorrichtungen angeordnet ist.

Im Falle einer Spreizvorrichtung mit wenigstens einem Schraubentrieb verläuft eine Drehachse des Schraubentriebs bevorzugt parallel zur Verschieberichtung.

Eine Außenseite wenigstens einer der beiden Klemmbacken kann mit wenigstens einer entlang einer Umfangsrichtung der Klemmplatte verlaufenden Nut oder Rille versehen sein. Die Umfangsrichtung der Klemmplatte ist dabei bei im Fahrzeugrad montierten Zustand gleichläufig mit einer Umfangsrichtung des Fahrzeugrades. Die Nut ist bevorzugt nach außen offen. Eine solche Nut kann für verschiedene Zwecke verwendet werden.

Gemäß einer vorteilhaften Ausgestaltung der Klemmplatte kann die wenigstens eine Nut zur Aufnahme eines Nabeninnenrings der Felge ausgestaltet sein. Hierdurch kann eine formschlüssige Verbindung in axialer Richtung zwischen der Klemmplatte und der Radnabe erhalten werden. In der Nut können zusätzlich Einlagen angeordnet sein, welche zum Schutz der Nabe dienen und ein Verkratzen derselben verhindern können. Alternativ oder zusätzlich kann die wenigstens eine Klemmbacke auch zumindest im Bereich der Außenseite aus einem weichen Material, beispielsweise Kunststoff, gebildet sein.

Die Klemmplatte kann auch wenigstens ein in der wenigstens einen Nut aufgenommenes, elastisch komprimierbares Andrückelement aufweisen. Das Andrückelement kann so angeordnet und bemessen sein, dass es sich bei der Montage der Klemmplatte in der zentralen Öffnung zwischen der übrigen Klemmbacke und einer Innenseite der Radnabe befindet und zwischen diesen beiden Teilen komprimiert wird. Ist das Andrückelement beispielsweise aus Gummi gefertigt, kann so ein Verrutschen der Klemmplatte in der Radnabe verhindert werden. gleichzeitig kann das Risiko der Beschädigung der Radnabe vermindert werden.

Gemäß einer weiteren vorteilhaften Ausgestaltung kann jede Klemmbacke mit wenigstens einer Nut versehen sein und das wenigstens eine Andrückelement um die Klemmplatte herum umlaufend in den Nuten beider Klemmbacken aufgenommen sein. Das Andrückelement kann dabei insbesondere ein Gummiring sein. Bevorzugt ist der Gummiring so dimensioniert und/oder so elastisch, dass er stets an der Klemmplatte verbleibt, unabhängig davon, ob die beiden Klemmbacken aufeinander zu bewegt sind oder voneinander weg. Der Gummiring kann auch einen Vorspannung erzeugen, die die beiden Klemmbacken aufeinander zu bewegt, wenn der Druck durch den Schraubentrieb gelöst wird. Das Andrückelement kann daher gleichzeitig als Rückstelleinrichtung dienen.

Die Klemmplatte kann wenigstens einen radial vorspringenden Anschlag aufweisen, der ein zu tiefes Einsetzen der Klemmplatte in die zentrale Öffnung der Felge verhindert. Beispielsweise können zwei oder mehr solche Anschläge bevorzugt äquigonal um den Umfang einer Klemmplatte angeordnet sein. Wenn beim Einsetzen der Klemmplatte gelangen die Anschläge am Rand der zentralen Öffnung anliegen, ist die Klemmplatte automatisch zentriert und in der richtigen Tiefe angeordnet. Anstelle wenigstens eines Vorsprunges kann als Anschlag auch eine flanschförmige Anschlagfläche vorgesehen sein, die sich entlang der Umfangsrichtung durchgängig an beiden Klemmbacken erstreckt. Diese Anschlagfläche kann die oben beschriebene Nut begrenzen.

Wenigstens eine der Klemmbacken kann aus Kunststoff und/oder aus Aluminium gefertigt sein.

Bevorzugt ist die wenigstens eine Spreizvorrichtung, insbesondere ein Schraubentrieb derselben, zur Anbringung einer Gleitschutzvorrichtung an der Klemmplatte ausgestaltet. Insbesondere kann die Spreizvorrichtung bei in der Felge montierten Zustand von außen zugänglich sein, so dass ein Teil einer Gleitschutzvorrichtung an dieser angebracht werden kann.

Besonders bevorzugt weist die wenigstens eine Spreizvorrichtung, insbesondere ein Schraubentrieb derselben, zur Befestigung einer Gleitschutzvorrichtung wenigstens eine Querschnittsverjüngung, beispielsweise in Form einer umlaufenden Nut, auf. In der Querschnittsverjüngung kann dann ein Teil einer Gleitschutzvorrichtung angebracht sein.

Die erfindungsgemäße Gleitschutzvorrichtung, insbesondere Reifenkette, kann dadurch weiter verbessert werden, dass diese im montierten Zustand an der Klemmplatte eine Zugkraft in Richtung der Klemmplatte erzeugt, um das Laufnetz der Gleitschutzvorrichtung selbsttätig auf die Reifenlauffläche zu ziehen bzw. auf dieser zu zentrieren.

Die erfindungsgemäße Gleitschutzvorrichtung ist nicht auf Laufnetze aus Kettensträngen beschränkt. Das Laufnetz kann auch aus voneinander beabstandeten Kunststoffteilen bestehen, aus Gurten, aus Seilen oder anderen zum Gleitschutz geeigneten Elementen.

Bevorzugt kann eine Befestigungsvorrichtung einer Gleitschutzvorrichtung, insbesondere eine sogenannte Spinne, an der Klemmplatte angebracht sein. Eine solche Spinne weist radiale Arme auf, die ein auf der Lauffläche des Fahrzeugreifens aufliegendes Laufnetz aufspannen.

Die Klemmplatte kann jedoch auch zur Anbringung anderer Gegenstände als Gleitschutzvorrichtungen am Fahrzeug verwendet werden. So können beispielsweise Schutzplanen an der Klemmplatte befestigt werden.

Im Folgenden ist die Erfindung beispielhaft anhand einer vorteilhaften Ausführungsform mit Bezug auf die Zeichnungen näher erläutert. Die bei der Ausführungsform beispielhaft dargestellte Merkmalskombination kann nach Maßgabe der obigen Ausführungen entsprechend für einen bestimmten Anwendungsfall durch weitere Merkmale ergänzt werden. Auch können, ebenfalls nach Maßgabe der obigen Ausführungen, einzelne Merkmale bei der beschriebenen Ausführungsform weggelassen werden, wenn es auf die Wirkung dieses Merkmals in einem konkreten Anwendungsfall nicht ankommt.

In den Zeichnungen werden für Elemente gleicher Funktion und/oder gleichen Aufbaus stets dieselben Bezugszeichen verwendet.

Es zeigen:
- Fig. 1: eine schematische perspektive Darstellung einer ersten vorteilhaften Ausführungsform einer erfindungsgemäßen scheibenförmigen Klemmplatte in einer Radnabe;
- Fig. 2: die Klemmplatte aus Fig. 1 in einer schematischen perspektiven Darstellung;
- Fig. 3: die Klemmplatte der Fig. 1 in einer Aufsicht entlang einer axialen Richtung;
- Fig. 4: eine Explosionsdarstellung der Klemmplatte aus Fig. 1;
- Fig. 5: eine Aufsicht auf die Klemmplatte der Fig. 1 in einem zum Einsetzen bereiten Zustand;
- Fig. 6: eine Explosionsdarstellung einer zweiten Ausführungsform der erfindungsgemäßen scheibenförmigen Klemmplatte;
- Fig. 7: die Klemmplatte der Fig. 6 in einer Aufsicht;
- Fig. 8: die Klemmplatte der Fig. 6 in einer schematischen perspektivischen Darstellung;
- Fig. 9: die Klemmplatte der Fig. 6 beim Einsetzen in eine zentrale Öffnung einer Radnabe
- Fig. 10: eine schematische Schnittdarstellung einer dritten Ausführungsform der erfindungsgemäßen Klemmplatte in einem ungespreizten Zustand;
- Fig. 11: die Klemmplatte der Fig. 10 mit auseinandergespreizten Klemmbacken;
- Fig. 12: eine Klemmbacke der Klemmplatte der Fig. 10 in einer perspektivischen Darstellung; und
- Fig. 13: eine Spreizvorrichtung der Klemmplatte aus Fig. 10 in einer perspektivischen Darstellung.

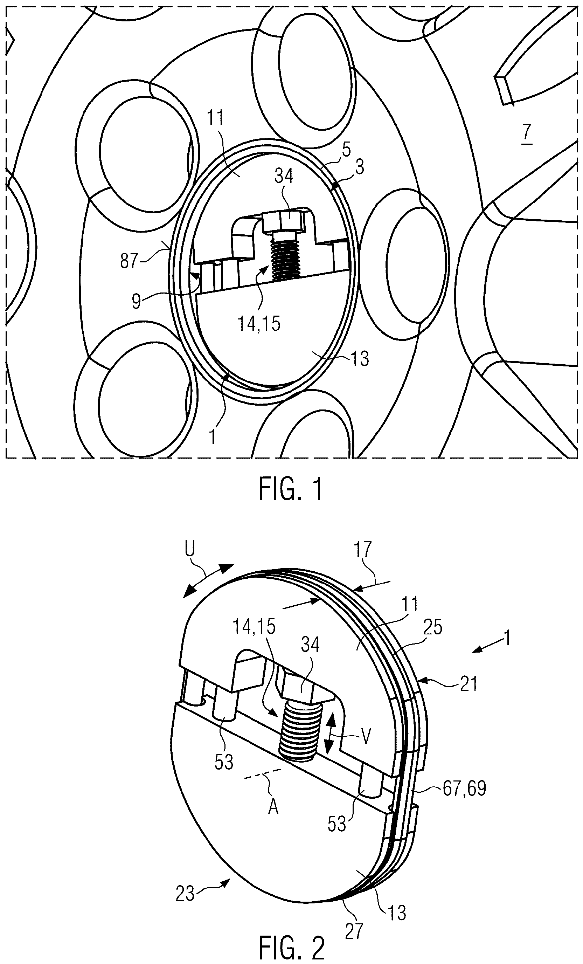

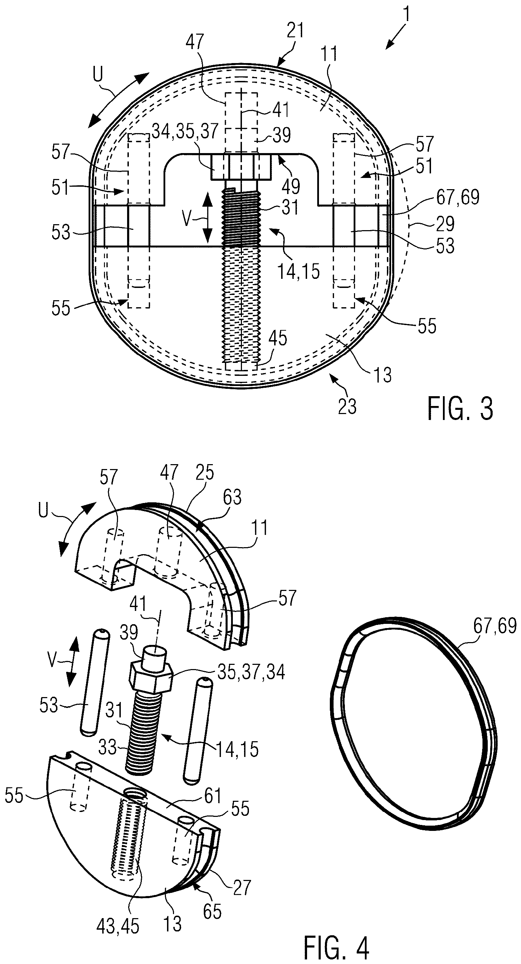

Im Folgenden ist eine erste vorteilhafte Ausführungsform einer erfindungsgemäßen scheibenförmigen Klemmplatte 1 mit Bezug auf die Figuren 1 bis 5 beschrieben. Dabei zeigen die Figuren jeweils unterschiedliche Perspektiven, wobei die Figuren 3 bis 5 teilweise transparent dargestellte Elemente zeigen, um auch innenliegende Teile der Klemmplatte 1 sichtbar zu machen.

In Fig. 1 ist die scheibenförmige Klemmplatte 1 in einem montierten Zustand gezeigt. Die Klemmplatte 1 ist in einer zentralen Öffnung 3 einer Felge oder Radnabe 5 eines Fahrzeugrades 7 angeordnet. Dabei ist sie gegen eine die zentrale Öffnung 3 begrenzende Innenseite 9 der Radnabe 5 gepresst. Die Innenseite 9 kann dabei insbesondere hohlzylindrisch geformt sein.

Die Klemmplatte 1 weist bevorzugt zwei Klemmbacken 11 und 13 auf, welche durch eine Spreizvorrichtung 14 miteinander verbunden sind. Durch die Spreizvorrichtung 14 können die beiden Klemmbacken 11 und 13 entlang einer Verschieberichtung aufeinander zu und voneinander weg bewegt werden. Die Spreizvorrichtung 14 der ersten Ausführungsform weist einen Schraubentrieb 15 auf.

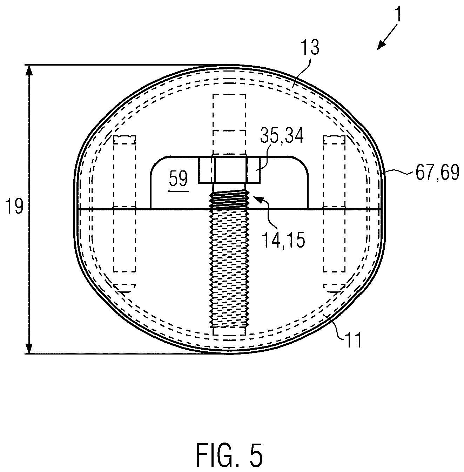

Die Klemmplatte 1 ist im Wesentlichen scheibenförmig bzw. plattenförmig. Das heißt, sie weist insgesamt eine flache Form auf. Dabei kann eine Dicke 17 kleiner als ein Durchmesser 19 sein. Bevorzugt ist die Dicke 17 um ein Vielfaches kleiner als der Durchmesser 19. In Fig. 5 ist der kleinste Durchmesser 19 gezeigt. Auch dieser ist um ein Vielfaches größer als die Dicke 17. Die Dicke 17 ist in Fig. 2 beispielhaft als die Dicke der Klemmbacke 11 dargestellt. Eine Gesamtdicke der Klemmplatte 1 kann sich beispielsweise auch aus einem Durchmesser eines Teils des Schraubentriebs 15 ergeben. Auch dieser Gesamtdurchmesser (nicht dargestellt) ist bevorzugt um ein Vielfaches geringer als der Durchmesser 19.

Jede der Klemmbacken 11 und 13 weist bevorzugt eine im Wesentlichen halbkreisscheibenförmige Kontur auf. Jede der Klemmbacken 11 und 13 weist eine im Wesentlichen halbkreisförmige Außenkontur 21 bzw. 23 auf. Auch Außenflächen 25 bzw. 27 der Klemmbacken 11 und 13 sind im Wesentlichen halbkreisförmig. Jede der Klemmbacken weist in ihrer Außenkontur 21 bzw. 23 auch kurze geradlinige Abschnitte auf. Trotzdem ist die Außenkontur 21 bzw. 23 jeder Klemmbacke 11 bzw. 13 im Wesentlichen halbkreisförmig.

Die Außenkonturen 21 und 23 können so geformt sein, dass sie Teil eines gemeinsamen, gedachten Kreises 29 sein können. Ein solcher ist in Fig. 3 angedeutet. Die Außenkonturen 21 und 23 sind vorzugsweise so gewählt, dass ein sicherer Sitz an der Innenseite 9 der Radnabe 5 im montierten Zustand gewährleistet ist.

Die halbkreisförmigen Außenkonturen 21 bzw. 23 oder der gedachte Kreis 29 geben eine Umfangsrichtung U der Klemmplatte 1 vor. Die Umfangsrichtung U entspricht im montierten Zustand bevorzugt einer Umfangsrichtung des Fahrzeugrades 7 bzw. verläuft parallel zu dieser. Durch die Kreisform ist zudem eine axiale Richtung A für die Klemmplatte 1 vorgegeben, welche ebenfalls mit einer axialen Richtung eines Fahrzeugrades im montierten Zustand zusammenfallen oder zumindest parallel zu dieser verlaufen kann.

Die beiden Klemmbacken 11 und 13 sind entlang einer Verschieberichtung V aufeinander zu und voneinander weg beweglich. Die Verschieberichtung V kann parallel zu einer radialen Richtung der scheibenförmigen Klemmplatte 1 verlaufen.

Der Schraubentrieb 15 der ersten Ausführungsform weist einen Gewindebolzen 31 auf. Der Gewindebolzen 31 besitzt ein Außengewinde 33 und ein als Schraubenantrieb 35 ausgestaltetes Antriebsorgan 34, beispielsweise mit einem Außensechskant 37. Der Gewindebolzen 31 weist darüber hinaus einen zylindrischen Abschnitt 39 ohne Außengewinde auf. Entlang einer Bolzenachse 41 liegt der Schraubenantrieb 35 zwischen einem Abschnitt mit dem Außengewinde 33 und dem zylindrischen Abschnitt 39. Der zylindrische Abschnitt 39 kann kürzer als der Abschnitt mit dem Außengewinde 33 sein.

Die Klemmbacke 13 weist eine mit einem Innengewinde 43 versehene Bohrung 45 auf. Das Innengewinde 43 ist komplementär zum Außengewinde 33 geformt, so dass der Gewindebolzen 31 eine Schraubverbindung mit dem Innengewinde 43 eingehen kann. Eine Drehung des Gewindebolzens 31 um seine Bolzenachse 41 führt innerhalb der Bohrung 45 daher zu einem Vortrieb entlang der Verschieberichtung V. Das Innengewinde 43 ist bevorzugt direkt in das Material der Klemmbacke 13 geformt. Alternativ dazu kann auch ein Gewindeeinsatz in die Klemmbacke 13 eingesetzt sein, welcher ein Innengewinde aufweist. Die Bohrung 45 kann in diesem Fall lediglich hohlzylindrisch zur Führung des Gewindebolzens 31 ausgestaltet sein.

Die Klemmbacke 11 ist mit einer Bohrung 47 versehen, welche hohlzylindrisch geformt ist. Die Bohrung 47 dient zur Aufnahme des zylindrischen Abschnitts 39. Die Bohrungen 47 und 45 fluchten miteinander. Der Schraubenantrieb 35 liegt an einer die Bohrung 47 umgebenden Wandung 49 der Klemmbacke 11 an. Hierdurch wird der als Außensechskant 37 gebildete Schraubenantrieb 35 an der Klemmbacke 11 abgestützt.

Der zylindrische Abschnitt 39 kann sich in der Bohrung 47 frei drehen. Wird der Gewindebolzen 31 am Schraubenantrieb 35 so gedreht, dass er sich aus der Klemmbacke 13 herausbewegt, schiebt er folglich die Klemmbacke 11 von der Klemmbacke 13 weg. Wird der Gewindebolzen 31 wieder zurückgedreht, kann die Klemmbacke 11 wieder in Richtung der Klemmbacke 13 verschoben werden.

Zur Führung der Klemmbacken 11 und 13 entlang der Verschieberichtung V sind in der ersten Ausführungsform zwei Führungsvorrichtungen 51 vorgesehen. Jede Führungsvorrichtung 51 besteht aus einem Stift 53 und Bohrungen 55 und 57 in jeder der beiden Klemmbacken 11 und 13. Die Bohrungen 55 und 57 erstrecken sich dabei jeweils parallel zur Verschieberichtung V und parallel zur Bolzenachse 41.

Bevorzugt weist die scheibenförmige Klemmplatte 1 zwei voneinander beabstandete Führungsvorrichtungen 51 auf, wobei der Schraubentrieb 15 quer zur Verschieberichtung V zwischen den beiden Führungsvorrichtungen 51 angeordnet ist.

In einem Zustand, in dem die beiden Klemmbacken 11 und 13 voneinander weg bewegt sind, wie er beispielsweise in den Fig. 1, 2 und 3 dargestellt ist, ist der Schraubentrieb 15 von außen zugänglich, so dass im Bereich des Außengewindes 15 ein Teil einer Gleitschutzvorrichtung angebracht werden kann.

Die Klemmbacke 13 ist mit einer Aussparung 59 versehen, welche Zugriff auf den Schraubenantrieb 35 für ein Werkzeug erlaubt. Die Klemmbacke 11 ist mit einer ebenen Innenfläche 61 versehen, in welche sich die Bohrungen 55 und 45 hinein erstrecken. Alternativ dazu kann auch die Klemmbacke 13 mit einer Aussparung versehen sein, um den Zugriff auf den Schraubenantrieb 35 zu erleichtern. Bei der gezeigten Ausführungsform wäre dann das Innengewinde 43 kürzer.

Die Außenflächen 25 und 27 beider Klemmbacken 11 und 13 können jeweils mit einer Nut 63 bzw. 65 versehen sein. Die beiden Nuten 63 und 65 erstrecken sich entlang der Umfangsrichtung U in den Außenflächen 25 und 27 und sind nach außen hin offen. In den Nuten 63 und 65 kann sich eine elastisches Andrückelement 67 befinden. Das elastische Andrückelement 67 kann insbesondere ein Gummiring 69 sein.

Das Andrückelement 67 kann zwei Aufgaben erfüllen. Zum einen kann es im montierten Zustand an der Innenseite 9 der Radnabe 5 anliegen, wodurch ein sicherer und vor allem schonender Sitz an der Radnabe 5 gewährleistet sein kann. Zum anderen kann das Andrückelement 67, insbesondere in Form eines Gummirings 69, die beiden Klemmbacken 11 und 13 aufeinander zu vorspannen, wenn der Gewindebolzen 31 in das Innengewinde 43 hineingeschraubt wird.

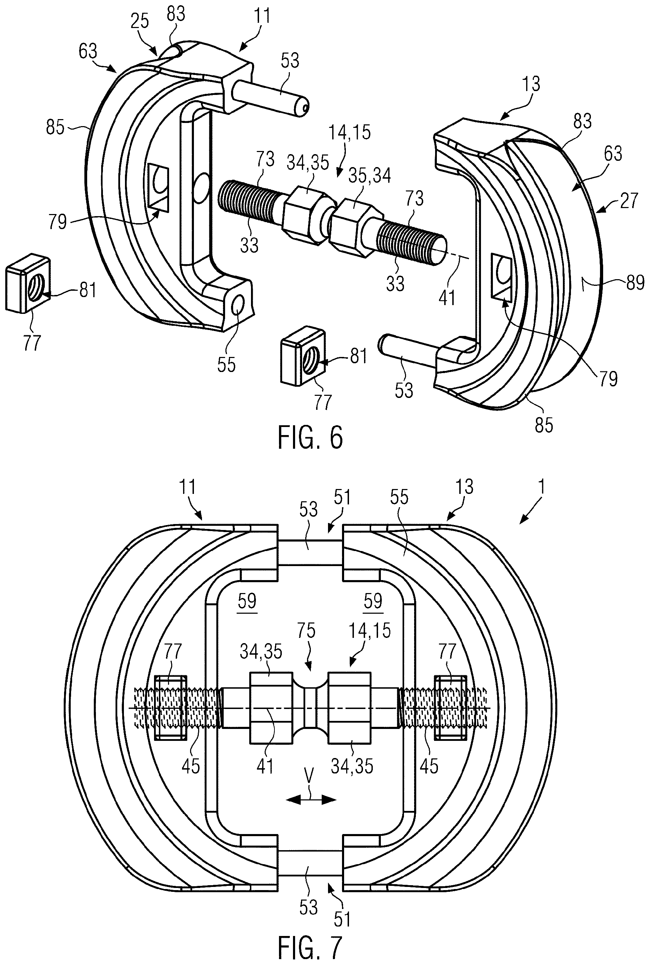

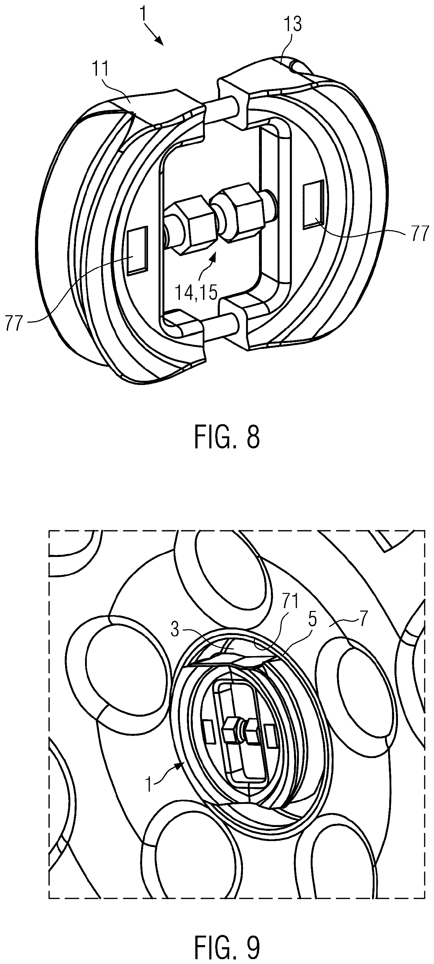

Im Folgenden ist eine zweite vorteilhafte Ausführungsform der erfindungsgemäßen scheibenförmigen Klemmplatte 1 mit Bezug auf die Figuren 6 bis 9 näher beschrieben. Der Kürze halber ist dabei nur auf die Unterschiede zu der zuvor beschriebenen Ausführungsform eingegangen.

Bevorzugt sind die beiden Klemmbacken 11 und 13 identisch ausgebildet. Dies ist jedoch nicht zwingend.

Die zweite Ausführungsform der Klemmplatte 1 ist dazu ausgestaltet, an einem Nabeninnenring 71 des Fahrzeugrades 7 montiert zu werden. Hierzu weisen die Außenflächen 25 und 27 der Klemmbacken 11 und 13 jeweils eine umlaufende Nut 63 und 65 auf. Die Nuten 63 und 65 sind hierbei so dimensioniert, dass der Nabeninnenring 71 in ihnen aufgenommen werden kann. Auf ein elastisches Andrückelement 67, insbesondere einen Gummiring 69, kann bei der zweiten Ausführungsform verzichtet werden. Alternativ dazu kann die Klemmplatte 1 jedoch auch mit einem solchen versehen sein.

Um Beschädigungen am Fahrzeugrad 7 zu vermeiden, sind die Klemmbacken 11 und 13 bevorzugt aus einem Kunststoff gefertigt. Alternativ dazu können sie auch aus einem Metall, insbesondere aus Aluminium, hergestellt sein, wobei zumindest die Außenflächen 25 und 27 mit einer Auflage oder einem Einsatz versehen sind, welcher eine schonende Montage am Nabeninnenring 71 erlaubt.

Die Spreizvorrichtung 14 der zweiten Ausführungsform weist einen Schraubentrieb 15 mit zwei gegenläufigen Gewinde 73 auf. Die gegenläufigen Gewinde 73 sind bevorzugt Außengewinde 33. Der Schraubentrieb 15 kann als Kombination von zwei Gewindebolzen betrachtet werden, welche so miteinander verbunden sind, dass ihre Außengewinde 73 voneinander weg weisen. Der Schraubentrieb 15 erstreckt sich entlang einer Bolzenachse 41. Die Bolzenachse 41 verläuft im zusammengesetzten Zustand parallel zur Verschieberichtung V.

In einem Mittenbereich zwischen den beiden Gewinden 73 sind zwei Schraubenantriebe 35 als Antriebsorgane 34 vorgesehen, welche entlang der Bolzenachse 41 voneinander beabstandet sind. Zwischen den beiden Schraubenantrieben 35 verläuft eine Querschnittsverjüngung 75 in Form einer umlaufenden Nut. Diese Querschnittsverjüngung 75 kann zur Anbringung eines Teils einer Gleitschutzvorrichtung (nicht dargestellt) dienen.

Die Klemmbacken 11 und 13 sind jeweils mit einer zylindrischen Bohrung 45 versehen. Die Bohrungen 45 sind bevorzugt nicht mit einem Innengewinde versehen. Stattdessen ist jede Klemmbacke 11 und 13 mit einem Gewindeeinsatz 77 versehen, welcher mit jeweils einem der Gewinde 73 zusammenwirken kann.

Jede Klemmbacke 11 und 13 ist mit einer Aufnahme 79 für jeweils einen Gewindeeinsatz 77 versehen. Die Aufnahmen 79 und die Gewindeeinsätze 77 sind jeweils so geformt, dass sich die Gewindeeinsätze 77 in den Aufnahmen 79 nicht drehen lassen. Jede Aufnahme 79 erstreckt sich so in die jeweilige Klemmbacke hinein, dass ein Gewinde 73 des Schraubentriebs 15 mit einem Innengewinde 81 des Gewindeeinsatz 77 zusammenwirken kann.

Die Drehung des Schraubentriebs 15 führt zur gleichzeitigen Bewegung beider Klemmbacken 11 und 13 aufeinander zu bzw. voneinander weg.

Anstelle von Gewindeeinsätzen 77 können auch die Bohrungen 45 mit entsprechend geformten Innengewinden versehen sein.

Die zweite Ausführungsform der Klemmplatte 1 weist ebenfalls zwei Führungsvorrichtungen 51 auf. Jede Führungsvorrichtung 51 weist einen Stift 53 auf, welcher bevorzugt monolithisch mit einer Klemmbacke 11 bzw. 13 gebildet ist. Zusätzlich weist jede Klemmbacke 11 und 13 eine Bohrung 55 auf, in die der Stift 53 der gegenüberliegenden Klemmbacke hineinragen kann. Die Stifte 53 müssen nicht monolithisch mit den Klemmbacken 11 bzw. 13 geformt sein. Stattdessen können sie auch separat gefertigt und in die jeweilige Klemmbacke 11 bzw. 13 eingesetzt sein. Alternativ dazu können die Führungsvorrichtungen 51 gemäß denen der ersten Ausführungsform ausgestaltet sein.

Die identischen Klemmbacken 11 und 13 weisen jede eine Aussparung 59 auf. Im zusammengesetzten Zustand bilden diese beiden Aussparungen 59 einen gemeinsamen Hohlraum, in dem die beiden Schraubenantriebe 35 und die Querschnittsverjüngung 75 von außen zugänglich sind.

Im dargestellten Ausführungsbeispiel sind die Nuten 63, 65 von zwei gegenüber einem Nutgrund 83 radial vorspringenden Rippen 83, 85 (Fig. 6) begrenzt, die beide denselben Außendurchmesser und, in einem Axialschnitt, denselben in etwa V-förmigen Querschnitt aufweisen. In einer Variante dieser Ausgestaltung kann eine der beiden Rippen 83, 85 die andere Rippe 85, 83 in radialer Richtung überragen. Dies kann dadurch erreicht werden, dass die eine Rippe 83, 85 in Umfangsrichtung voneinander beabstandete Vorsprünge oder durchgängig einen größeren Außendurchmesser als die andere Rippe 85, 83 aufweist. Insbesondere überragt die eine Rippe 83, 85 einen Rand 87 der zentralen Öffnung 3. Bei dieser Ausgestaltung dient die eine Rippe 83, 85 als ein Anschlag, der bei vollständig in die zentrale Öffnung 3 eingesetzter Klemmplatte am Rand 87 anliegt und die Klemmplatte 1 automatisch zentriert. Die dem Rand 87 zugewandte Anschlagfläche 89 (Fig. 6) der Klemmplatte 1 kann senkrecht oder geneigt zur axialen Richtung A verlaufen.

In einer anderen Variante weist die Klemmplatte 1 keine Nuten 63, 65 auf. Die Umfangsfläche kann hierbei glatt sein, also eine Zylindermantelfläche bilden.

Schließlich kann auch nur eine Rippe 85 vorgesehen sein, die einen Anschlag wie oben beschrieben bildet.

Die Klemmplatte 1 eignet sich nicht nur zur Anbringung einer Gleitschutzvorrichtung, wie sie in der DE 10 2008 004 807 A1 beschreiben ist. Sie erlaubt auch die einfache Anbringung anderer

Elemente, wie beispielsweise von Schutzplanen für das Fahrzeug, ohne dass die Felge beschädigt wird.

Nicht dargestellt ist, dass an der Klemmplatte eine Blende angebracht sein kann, um die Klemmplatte bei Nichtgebrauch in ästhetisch ansprechender Weise abzudecken. Die Blende kann beispielsweise auf die Querschnittsverjüngung 75 oder auf eine andere Stelle des Schraubentriebs 15, oder wenigstens einen Stift 53 aufgeclipst sein.

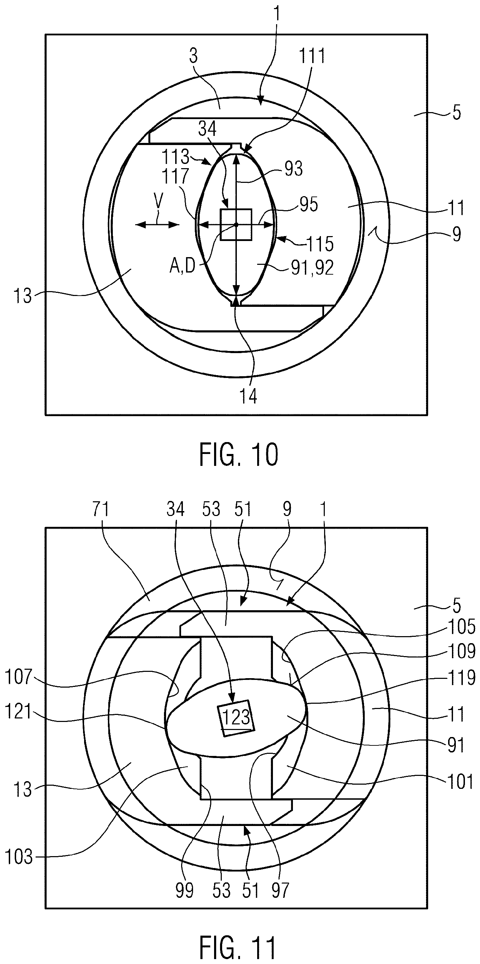

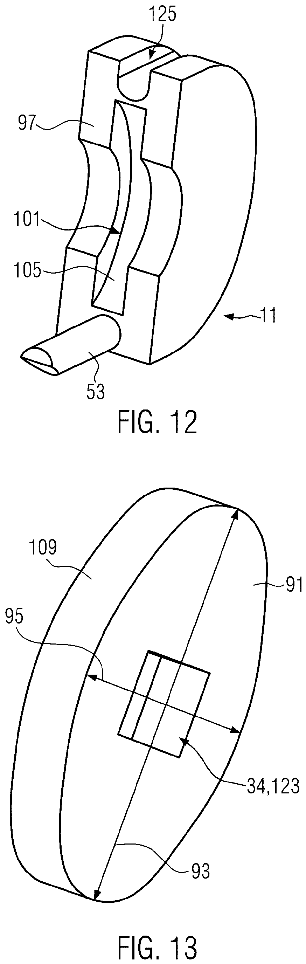

Im Folgenden ist eine dritte vorteilhafte Ausführungsform der erfindungsgemäßen Klemmplatte mit Bezug auf die Figuren 10 bis 13 näher beschrieben. Auch hier wird dabei, der Kürze halber, lediglich auf die Unterschiede zu den zuvor beschriebenen Ausführungsformen eingegangen.

Die Figuren 10 und 11 zeigen die Klemmplatte 1 der dritten Ausführungsform in einer Schnittdarstellung parallel zu einer durch die scheibenförmige Klemmplatte 1 aufgespannten Scheibenebene.

Die dritte Ausführungsform der erfindungsgemäßen Klemmplatte 1 weist eine Spreizvorrichtung 14 ohne Schraubentrieb 15 auf. Stattdessen ist eine im Wesentlichen ovale Kurvenscheibe 91 als Spreizelement 92 vorgesehen, welches zwischen den beiden Klemmbacken 11 und 13 angeordnet ist.

Die Kurvenscheibe 91 weist eine Länge 93 auf, die größer ist als eine quer zu der Länge 93 gemessene Breite 95. Länge 93 und Breite 95 der Kurvenscheibe 91 erstrecken sich dabei quer zueinander und quer zur axialen Richtung A. Die Länge 93 definiert die Längsrichtung der Kurvenscheibe 91 und die Breite 95 die Breitenrichtung derselben.

Die Kurvenscheibe 91 ist um eine Drehachse D drehbar. Die Drehachse D kann im montierten Zustand mit der axialen Richtung A zusammenfallen. Dies ist jedoch nicht erforderlich. Bevorzugt liegt die Drehachse D bezogen auf die Richtungen der Länge 93 und Breite 95 mittig in der Kuchenscheibe 91. Jedoch ist auch dies nicht zwingend erforderlich. Auch eine exzentrische Ausgestaltung ist möglich.

Die Klemmbacken 11 und 13 weisen Innenseiten 97 und 99 auf, welche jeweils mit einer Nut 101 und 103 zur Aufnahme der Kurvenscheibe 91 versehen sind. Durch die Nuten 101 und 103 ist die Kurvenscheibe gegen Herausfallen gesichert und wird gleichzeitig bei einer Drehung um die Drehachse D geführt. Jede Nut 101 bzw. 103 ist mit einem Grund 105 bzw. 107 versehen, an dem die Kurvenscheibe mit ihrer Außenseite 109 entlanggleiten kann.

Vorzugsweise ist der Grund 105 bzw. 107 der Nut 101 bzw. 103 konkav geformt. Die konkave Form kann die Drehung der Kurvenscheibe 91 erleichtern. Darüber hinaus kann die konkave Form im Wesentlichen komplementär zu Kurvenscheibe 91 gebildet sein, sodass die Kurvenscheibe 91 im Wesentlichen formschlüssig in einer durch die beiden Nuten 101 und 103 gebildeten Aufnahme 111 aufgenommen sein kann.

Die Nuten 101 und 103 sind bevorzugt so geformt, dass Vorzugsstellungen für die Kurvenscheibe 91 vorgegeben sein können. So ist in Fig. 10 eine Stellung gezeigt, bei der die Kurvenscheibe 91 mit ihrer Längsrichtung quer zur Verschieberichtung V der Klemmplatte 1 ausgerichtet ist. An ihren sich in Breitenrichtung gegenüberliegenden Seiten liegt die Kurvenscheibe 91 mit ihrer Außenseite 109 im Wesentlichen großflächig an den beiden Gründen 105 und 107 an. Diese Stellung definiert eine Einsetzstellung 113 der Klemmplatte 1. In der Einsetzstellung 113 sind beide Klemmbacken 11 und 13 nah beieinander, sodass die Klemmplatte 1 leicht in die zentrale Öffnung 3 einsetzbar ist.

Wenigstens einer der beiden Gründe 105 bzw. 107 der Nuten 101 bzw. 103 kann mit wenigstens einer zusätzlichen Einbuchtung 115 bzw. 117 versehen sein, an der eines der beiden sich in Längsrichtung der Kurvenscheibe 91 gegenüberliegenden Enden 119 bzw. 121 aufnehmbar ist. In der beispielhaft dargestellten Ausführungsform sind beide Gründe 105 und 107 mit jeweils einer solchen Ausbuchtung 117 bzw. 119 versehen. Es ist jedoch auch möglich, nur eine der beiden Klemmbacken 11 oder 13 mit einer solchen Ausbuchtung zu versehen. Sind die Enden 119 und 121 in den Ausbuchtungen 115 bzw. 117 aufgenommen, ist eine endgültige Spreizposition (nicht gezeigt) für die Klemmplatte 1 erreicht, bei der die beiden Klemmbacken 11 und 13 voneinander weg gespreizt sind.

Bei einer Drehung der Kurvenscheibe 91 kann jeweils ein Ende 119 bzw. 121 der Kurvenscheibe 91 zusammen mit einer der Ausbuchtungen 115 bzw. 117 ein Gehemme darstellen. Die Kurvenscheibe 91 kann, wenn jedes der Enden 119 und 121 in einer der Ausbuchtungen 115 und 117 aufgenommen ist, gegen weiteres Verdrehen gesichert sein, sofern nicht eine vorbestimmte Drehkraft auf die Kurvenscheibe 91 überschritten wird. Hierdurch kann ein Benutzer spürbar merken, wenn die Spreizposition erreicht wird. In Fig. 11 ist die Klemmscheibe 91 kurz vor Erreichen der Spreizposition dargestellt.

Die Kurvenscheibe 91 ist mit einem Antriebsorgan 34 versehen. Das Antriebsorgan 34 ist als Öffnung 123 mit einem 4-kantigen Querschnitt geformt. In diese Öffnung 123 lässt sich ein Werkzeug mit passendem 4-kantigen Profil einsetzen, um die Kurvenscheibe 91 um die Drehachse D zu drehen. Alternativ sind auch andere geeignete Antriebsorgane 34 möglich. Beispielsweise kann die Öffnung 123 mit einem anderen Profil, beispielsweise einem Innensechskant, versehen sein. Eine weitere Alternative besteht darin, dass die Kurvenscheibe 91 nicht mit einer Öffnung 123, sondern mit einem Gegenstück für ein Werkzeug versehen ist.

Die Kurvenscheibe 91 ist vorzugsweise aus einem elastischen Material gebildet. Vorzugsweise ist das Material der Kurvenscheibe 91 elastischer als das Material der Klemmbacken 11 und 13. Alternativ dazu kann die Kurvenscheibe 91 aus einem harten Material, beispielsweise Stahl, Aluminium, oder Hartplastik hergestellt sein. Die Klemmbacken 11 bzw. 13 können dann entsprechend aus einem weicheren oder elastischerem Material gebildet sein. Gemäß einer weiteren Ausgestaltung können sowohl die Klemmbacken 11 und 13 als auch die Kurvenscheibe 91 aus einem harten Material gebildet sein. In diesem Fall sind die Klemmbacken 11 und 13 vorzugsweise mit einem oder mehreren elastischen Andrückelementen 67 (hier nicht gezeigt), wie bei den oben beschriebenen Ausführungsformen der Klemmplatte 1, versehen.

Die dritte Ausführungsform der Klemmplatte 1 ist mit zwei Führungsvorrichtungen 51 versehen, welche jeweils einen Stift 53 aufweisen. Die jeweils gegenüberliegende Klemmbacke 11 bzw. 13 ist mit einer Aufnahme 125 versehen, welche im Gegensatz zu den zuvor beschriebenen Ausführungsformen nicht als Bohrung, sondern als parallel zur Verschieberichtung V verlaufende Nut geformt ist.

### Bezugszeichen

- 1: Scheibenförmige Klemmplatte
- 3: Zentrale Öffnung
- 5: Radnabe
- 7: Fahrzeugrad
- 9: Innenseite
- 11,13: Klemmbacken
- 14: Spreizvorrichtung
- 15: Schraubentrieb
- 17: Dicke
- 19: Durchmesser
- 21,23: Außenkonturen
- 25, 27: Außenflächen
- 29: Kreis
- 31: Gewindebolzen
- 33: Außengewinde
- 34: Antriebsorgan
- 35: Schraubenantrieb
- 37: Außensechskant
- 39: Zylindrischer Abschnitt
- 41: Bolzenachse
- 43: Innengewinde
- 45,47: Bohrung
- 49: Wandung
- 51: Führungsvorrichtung
- 53: Stift
- 55, 57: Bohrung
- 59: Aussparung
- 61: Innenfläche
- 63, 65: Nut
- 67: Elastisches Andrückelement
- 69: Gummiring
- 71: Nabeninnenring
- 73: Gegenläufige Gewinde
- 75: Querschnittsverjüngung
- 77: Gewindeeinsatz
- 79: Aufnahme
- 81: Innengewinde
- 83, 85: Rippe
- 87: Rand der zentralen Öffnung
- 89: Anschlagfläche
- 91: Kurvenscheibe
- 92: Spreizelement
- 93: Länge
- 95: Breite
- 97, 99: Innenseite
- 101, 103: Nut
- 105,107: Grund
- 109: Außenseite
- 111: Aufnahme
- 113: Einsetzstellung
- 115, 117: Ausnehmung
- 119, 121: Ende
- 123: Öffnung
- 125: Nut
- A: Axiale Richtung
- D: Drehachse
- U: Umfangsrichtung
- V: Verschieberichtung

## Patentansprüche

1. Scheibenförmige Klemmplatte (1) zur Anbringung in einer zentralen Öffnung (3) einer Radnabe (5) eines Fahrzeugrades (7), wobei die Klemmplatte (1) wenigstens eine Spreizvorrichtung (14) und wenigstens zwei Klemmbacken (11, 13) aufweist, und wobei die wenigstens zwei Klemmbacken (11, 13) durch die wenigstens eine Spreizvorrichtung (14) aufeinander zu und voneinander weg beweglich miteinander verbunden sind.

2. Scheibenförmige Klemmplatte (1) nach Anspruch 1, wobei jede Klemmbacke (11, 13) eine kreisbogenförmige Außenkontur (21, 23) aufweist.

3. Scheibenförmige Klemmplatte (1) nach Anspruch 2, wobei die Außenkonturen (21, 23) der wenigstens zwei Klemmbacken (11, 13) Teil eines gemeinsamen Kreises (29) sind.

4. Scheibenförmige Klemmplatte (1) nach einem der Ansprüche 1 bis 3, wobei die wenigstens eine Spreizvorrichtung (14) wenigstens einen Schraubentrieb (15) mit wenigstens zwei gegenläufigen Gewinde (33, 73) aufweist, von denen jedes mit einem komplementär ausgestalteten Gewinde (43, 81) an jeweils einer der Klemmbacken (11, 13) zusammenwirkend angeordnet ist.

5. Scheibenförmige Klemmplatte (1) nach einem der Ansprüche 1 bis 4, wobei die wenigstens eine Spreizvorrichtung (14) wenigstens einen Schraubentrieb (15) mit einem Gewindebolzen (31) aufweist und wenigstens eine der Klemmbacken (11, 13) mit wenigstens einem Innengewinde (43, 81) zur Aufnahme des Gewindebolzens (31) versehen ist.

6. Scheibenförmige Klemmplatte (1) nach einem der Ansprüche 1 bis 5, wobei die wenigstens eine Spreizvorrichtung (14) wenigstens ein zwischen den beiden Klemmbacken (11, 13) angeordnetes Antriebsorgan (34) zur Betätigung der Spreizvorrichtung (14) aufweist.

7. Scheibenförmige Klemmplatte (1) nach einem der Ansprüche 1 bis 6, wobei die scheibenförmige Klemmplatte (1) wenigstens eine Führungsvorrichtung (51) zur verschieblichen Führung der beiden Klemmbacken (11, 13) aufweist.

8. Scheibenförmige Klemmplatte (1) nach Anspruch 7, wobei zwei Führungsvorrichtungen (51) vorgesehen sind, und die wenigstens eine Spreizvorrichtung (14) quer zu einer Verschieberichtung (V) der Klemmbacken (11, 13) zwischen den wenigstens zwei Führungsvorrichtungen (51) angeordnet ist.

9. Scheibenförmige Klemmplatte (1) nach einem der Ansprüche 1 bis 8, wobei eine Außenfläche (25, 27) wenigstens einer Klemmbacke (11, 13) mit wenigstens einer entlang einer Umfangsrichtung (U) der scheibenförmigen Klemmplatte (1) verlaufenden Nut (63, 65) versehen ist.

10. Scheibenförmige Klemmplatte (1) nach Anspruch 9, wobei die wenigstens eine Nut (63, 65) zur Aufnahme eines Nabeninnenrings (71) der Radnabe (5) ausgestaltet ist.

11. Scheibenförmige Klemmplatte (1) nach Anspruch 9 oder 10, wobei die scheibenförmige Klemmplatte (1) wenigstens ein in der wenigstens einen Nut (63, 65) aufgenommenes elastisch komprimierbares Andrückelement (67) aufweist.

12. Scheibenförmige Klemmplatte (1) nach einem der Ansprüche 1 bis 11, wobei wenigstens eine der Klemmbacken (11, 13) aus Kunststoff und/oder Aluminium gefertigt ist.

13. Scheibenförmige Klemmplatte (1) nach einem der Ansprüche 1 bis 12, wobei die wenigstens eine Spreizvorrichtung (14) zur Befestigung einer Gleitschutzvorrichtung ausgestaltet ist.

14. Scheibenförmige Klemmplatte (1) nach Anspruch 13, wobei die wenigstens eine Spreizvorrichtung (14) mit wenigstens einer Querschnittsverjüngung (75) versehen ist.

15. Gleitschutzvorrichtung, insbesondere Reifenkette, mit einem zur Auflage auf einer Reifenlauffläche ausgestalteten Laufnetz und mit einer scheibenförmigen Klemmplatte (1) nach einem der Ansprüche 1 bis 14, an der das Laufnetz unverlierbar gehalten ist.

## Claims

1. A disk-shaped clamping plate (1) for mounting in a central opening (3) of a wheel hub (5) of a vehicle wheel (7), wherein the clamping plate (1) comprises at least one expander device (14) and at least two clamping jaws (11, 13), and wherein the at least two clamping jaws (11, 13) are connected to each other by the at least one expanding device (14) so as to be movable towards and away from each other.

2. The disk-shaped clamping plate (1) according to claim 1, wherein each clamping jaw (11, 13) has a circular arc-shaped outer contour (21, 23).

3. The disk-shaped clamping plate (1) according to claim 2, wherein the outer contours (21, 23) of the at least two clamping jaws (11, 13) are part of one circle (29).

4. The disk-shaped clamping plate (1) according to any one of claims 1 to 3, wherein the at least one expander device (14) includes at least one screw drive (15) with at least two counterturning threads (33, 73), each of which is arranged to interact with a complementary-shaped thread (43, 81) on one of the clamping jaws (11, 13), respectively.

5. The disk-shaped clamping plate (1) according to any one of claims 1 to 4, wherein the at least one expander device (14) includes at least one screw drive (15) with a threaded stud (31) and at least one of the clamping jaws (11, 13) is provided with at least one internal thread (43, 81) for receiving the threaded stud (31).

6. The disk-shaped clamping plate (1) according to any one of claims 1 to 5, wherein the at least one expander device (14) includes at least one drive member (34) arranged between the two clamping jaws (11, 13) for actuating the expander device (14).

7. The disk-shaped clamping plate (1) according to any one of claims 1 to 6, wherein the disk-shaped clamping plate (1) includes at least one guiding device (51) for displaceably guiding the two clamping jaws (11, 13).

8. The disk-shaped clamping plate (1) according to claim 7, wherein two guiding devices (51) are provided, and the at least one expander device (14) is arranged transversely to a displacement direction (V) of the clamping jaws (11, 13) between the at least two guiding devices (51).

9. The disk-shaped clamping plate (1) according to any one of claims 1 to 8, wherein an outer surface (25, 27) of at least one clamping jaw (11, 13) is provided with at least one groove (63, 65) extending along a circumferential direction (U) of the disk-shaped clamping plate (1).

10. The disk-shaped clamping plate (1) according to claim 9, wherein the at least one groove (63, 65) is configured to receive an inner hub ring (71) of the wheel hub (5).

11. The disk-shaped clamping plate (1) according to claims 9 or 10, wherein the disc-shaped clamping plate (1) includes at least one elastically compressible pressing element (67) accommodated in the at least one groove (63, 65).

12. The disk-shaped clamping plate (1) according to any one of claims 1 to 11, wherein at least one of the clamping jaws (11, 13) is made of plastic and/or aluminium.

13. The disk-shaped clamping plate (1) according to any one of claims 1 to 12, wherein the at least one expander device (14) is configured for fastening an antislipping device.

14. The disk-shaped clamping plate (1) according to claim 13, wherein the at least one expander device (14) is formed with at least one cross-sectional taper (75).

15. An antislipping device, in particular a tire chain, comprising a chain net configured to be placed on a tire tread and a disc-shaped clamping plate (1) according to any one of claims 1 to 14, on which the chain net is retained captive.

## Revendications

1. Plaque de serrage en forme de disque (1) destinée à être montée dans une ouverture centrale (3) d'un moyeu de roue (5) d'une roue de véhicule (7), dans laquelle la plaque de serrage (1) comporte au moins un dispositif d'écartement (14) et au moins deux mâchoires de serrage (11, 13), et dans laquelle lesdites au moins deux mâchoires de serrage (11, 13) sont connectées entre elles par ledit au moins un dispositif d'écartement (14) de manière à pouvoir se rapprocher et s'éloigner l'une de l'autre.

2. Plaque de serrage en forme de disque (1) selon la revendication 1, dans laquelle chaque mâchoire de serrage (11, 13) présente un contour externe en forme d'arc de cercle (21, 23).

3. Plaque de serrage en forme de disque (1) selon la revendication 2, dans laquelle les contours externes (21, 23) desdites au moins deux mâchoires de serrage (11, 13) font partie d'un cercle commun (29).

4. Plaque de serrage en forme de disque (1) selon l'une des revendications 1 à 3, dans laquelle ledit au moins un dispositif d'écartement (14) comporte au moins un entraînement à vis (15) avec au moins deux filetages opposés (33, 73), qui sont agencés chacun pour coopérer avec un filetage complémentaire (43, 81) sur l'une des mâchoires de serrage (11, 13).

5. Plaque de serrage en forme de disque (1) selon l'une des revendications 1 à 4, dans laquelle ledit au moins un dispositif d'écartement (14) comporte au moins un entraînement à vis (15) avec un boulon fileté (31) et au moins l'une des mâchoires de serrage (11, 13) est pourvue d'au moins un filetage interne (43, 81) pour recevoir le boulon fileté (31).

6. Plaque de serrage en forme de disque (1) selon l'une des revendications 1 à 5, dans laquelle ledit au moins un dispositif d'écartement (14) comporte au moins un organe d'entraînement (34) agencé entre les deux mâchoires de serrage (11, 13) pour actionner le dispositif d'écartement (14) .

7. Plaque de serrage en forme de disque (1) selon l'une des revendications 1 à 6, dans laquelle la plaque de serrage en forme de disque (1) comporte au moins un dispositif de guidage (51) pour guider de manière coulissante les deux mâchoires de serrage (11, 13).

8. Plaque de serrage en forme de disque (1) selon la revendication 7, dans laquelle deux dispositifs de guidage (51) sont pourvus, et ledit au moins un dispositif d'écartement (14) est agencé transversalement par rapport à une direction de coulissement (V) des mâchoires de serrage (11, 13) entre lesdits au moins deux dispositifs de guidage (51) .

9. Plaque de serrage en forme de disque (1) selon l'une des revendications 1 à 8, dans laquelle une surface externe (25, 27) d'au moins une mâchoire de serrage (11, 13) comporte au moins une rainure (63, 65) qui s'étend selon une direction circonférentielle (U) de la plaque de serrage en forme de disque (1).

10. Plaque de serrage en forme de disque (1) selon la revendication 9, dans laquelle ladite au moins une rainure (63, 65) est configurée pour recevoir une bague interne de moyeu (71) du moyeu de roue (5).

11. Plaque de serrage en forme de disque (1) selon la revendication 9 ou 10, dans laquelle la plaque de serrage en forme de disque (1) comporte au moins un élément de pression élastiquement compressible (67) reçu dans ladite au moins une rainure (63, 65).

12. Plaque de serrage en forme de disque (1) selon l'une des revendications 1 à 11, dans laquelle au moins l'une des mâchoires de serrage (11, 13) est fabriquée en matière plastique et/ou en aluminium.

13. Plaque de serrage en forme de disque (1) selon l'une des revendications 1 à 12, dans laquelle ledit au moins un dispositif d'écartement (14) est configuré pour fixer un dispositif antidérapant.

14. Plaque de serrage en forme de disque (1) selon la revendication 13, dans laquelle ledit au moins un dispositif d'écartement (14) est pourvu d'au moins une réduction de la section transversale (75).

15. Dispositif antidérapant, en particulier chaîne pour pneumatique, avec un filet de roulement configuré pour reposer sur une bande de roulement de pneu et avec une plaque de serrage en forme de disque (1) selon l'une des revendications 1 à 14, sur laquelle le filet de roulement est maintenu de manière imperdable.
